(19) Europäisches Patentamt

European Patent Office

Office européen des brevets

(11) **EP 3 991 830 B1**

(12) **EUROPEAN PATENT SPECIFICATION**

(45) Date of publication and mention
of the grant of the patent:
**17.01.2024 Bulletin 2024/03**

(21) Application number: **20204369.1**

(22) Date of filing: **28.10.2020**

(51) International Patent Classification (IPC):
**B01D 67/00** (2006.01)   **B01D 69/02** (2006.01)
**B01D 69/10** (2006.01)   **B01D 71/02** (2006.01)

(52) Cooperative Patent Classification (CPC):
**B01D 67/00411; B01D 67/00413; B01D 67/0046;**
**B01D 69/02; B01D 69/10; B01D 71/02;**
**B01D 71/021; B01D 71/0215; B01D 71/024;**
**B01D 71/025; B01D 71/027;** B01D 2323/12;
B01D 2325/24; B01D 2325/30

(54) **PROCESS OF MANUFACTURE OF NON-OXIDE CERAMIC FILTRATION ELEMENT AND NON-OXIDE CERAMIC FILTRATION ELEMENT**

VERFAHREN ZUR HERSTELLUNG EINER NICHT-OXIDKERAMISCHEN FILTRATIONSELEMENTS UND NICHT-OXIDKERAMISCHES FILTRATIONSELEMENT

PROCÉDÉ DE FABRICATION D'UN ÉLÉMENT DE FILTRATION EN CÉRAMIQUE NON OXYDÉE ET ÉLÉMENT DE FILTRATION EN CÉRAMIQUE NON OXYDÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.05.2022 Bulletin 2022/18**

(73) Proprietor: **MANN+HUMMEL LIFE SCIENCES & ENVIRONMENT HOLDING SINGAPORE PTE. LTD.**
**Singapore 139234 (SG)**

(72) Inventors:
• **EHLEN, Frank**
**66540 Neunkirchen (DE)**
• **GIEßELMANN, Sabine**
**71638 Ludwigsburg (DE)**

(74) Representative: **Maiwald GmbH**
**Elisenhof**
**Elisenstraße 3**
**80335 München (DE)**

(56) References cited:
**CN-B- 102 718 494    CN-B- 104 587 846**
**US-A- 5 120 576    US-A1- 2004 038 105**

• **Kanali Christopher ET AL: "Physical and Chemical Properties of Crushed Ceramic and Porcelain Clay Tile Powder", International Journal of IT, Engineering and Applied Sciences Research (IJIEASR), 1 July 2018 (2018-07-01), XP093052351, Retrieved from the Internet: URL:https://www.researchgate.net/publicati on/331875691 [retrieved on 2023-06-06]**

EP 3 991 830 B1

**Description**

BACKGROUND

Technical field

The present invention relates to a process for the manufacture of a ceramic filter membrane for nanofiltration purposes in liquid purification processes, and the ceramic filtration element prepared by said process.

Background

The provision of clean and drinkable water is one of the emerging problems to be solved in view of the worldwide growth of population and industrialization along with natural disasters. Water may be polluted with bacteria, viruses, protozoa and fungi, bacteriological and biological concomitants, biologically active or toxic substances with high molecular weight, or micro plastics which may threaten the health of humans. In addition to that, industrial wastewaters may be polluted with organic chemicals, dissolved solids or suspended material.

To reduce the amount of released pollutants, the amount of toxic wastes, or the volume of reaction mixtures to be purified in an energy efficient manner, filter membranes are often used for filtration or separation purposes, e.g. in the purification of industrial wastewater or process fluids. These filter membranes may be polymeric membranes or ceramic membranes. The latter ones are often preferred over polymeric membranes, especially in filtration or separation processes involving aggressive media such as strongly acidic or strongly basic wastewaters.

In the prior art, two classes of ceramic filtration membranes are known: oxidic and non-oxidic filtration membranes.

Oxidic ceramic filtration membranes consist of particles of metal oxides, aluminum oxide ($Al_2O_3$), beryllium oxide (BeO), calcium oxide (CaO), hafnium oxide ($HfO_2$), iron oxide ($FeO/Fe_2O_3$), lanthanum oxide ($La_2O_3$), magnesium oxide (MgO), manganese oxide ($MnO_2$), silicon dioxide ($SiO_2$), strontium oxide (SrO), thorium oxide ($ThO_2$), titanium dioxide ($TiO_2$), yttrium oxide ($Y_2O_3$), zirconium dioxide ($ZrO_2$) or mixtures thereof. The process of manufacture of oxidic ceramic filter membranes is usually achieved by a sol-gel process, in which a support surface is coated with a sol containing a precursor metal compound, e.g. a metal alcoholate. In the course of drying and sintering, the precursor is oxidized to the corresponding metal oxide forming membrane layers with small pore sizes.

Non-oxide ceramic filter membranes, on the other hand side, consist of particles silicon carbide (SiC), silicon nitride ($Si_3N_4$), tungsten carbide (WC), aluminum nitride (AIN) or boron nitride (BN), for example. Membranes prepared from non-oxide ceramic nanoparticles usually have excellent properties with regard to their resistance to corrosive media and low tendency of membrane fouling due to the low isoelectric point. For the preparation of non-oxide ceramic filter membranes, sol-gel processes are not applicable. Therefore, non-oxide ceramic filter membranes are usually prepared by sintering of powders with a narrow size distribution. Thereby, the pore size and the volume of the pores can be adjusted through a careful selection of the particles. The strong covalent bonding in non-oxide ceramic nanoparticles, e.g. between silicon and carbon, however, renders the sintering process more difficult than the processes used in the manufacture of oxide ceramic filter membranes because the diffusion is limited. To overcome this, and to prevent the formation of metal oxides during the sintering process, the conditions have to be carefully chosen: The sintering can only be successful at very high temperatures (e.g., about 2,500 °C) close to the decomposition temperature of the material used and under exclusion of oxygen, i.e. through application of a vacuum or sintering under inert atmosphere. Hence, non-oxide ceramic filter membranes are difficult to prepare and expensive.

Alternatively, the temperature required in the sintering process can be reduced by the use of additives which, on the down hand side, may render the exact adjustment of the pore size difficult, change the properties of the ceramic filtration membrane and reduce the quality. Common sintering aids are modifications and derivatives of silicon dioxide ($SiO_2$), e.g. glass, borosilicate glass, cristobalite or mullite. During the process of sintering, these additives form bridges between the non-oxide nanoparticles to establish a solid network. Nevertheless, it has to be noted that this silicone dioxide based components of the ceramic filter membrane limit the mechanical strength and the resistance towards corrosive media. The excellent properties the non-oxide ceramic materials can hence not be utilized to the full potential.

CN 104 587 846 B discloses a low-temperature sintering method for preparing porous ceramic filter membranes.

CN 102 718 494 B discloses a preparation method of composite silicon carbide ceramic filter membranes.

US 2004/0038105 A1 discloses a cation- and/or proton-conducting membrane, to a process for producing it, and to its use.

US 5,120,576 discloses a process for forming a porous inorganic membrane on a porous support is provided. The support is coated with refractory particles which sinter at a first temperature. The coating then is impregnated with an inorganic binder which reacts at a second temperature, lower than the first temperature.

Therefore, the provision of ceramic filter membranes which utilize the advantageous properties of ceramic materials to the full potential, particularly non-oxide ceramic materials, but which membranes - at the same time - can be prepared at low sintering temperatures omitting the necessity of inert atmosphere while sintering is highly desirable.

SUMMARY

The present invention relates to ceramic filtration elements as defined in the appended claims. The more generic description is provided for illustrative purposes only. Embodiments not falling under these claims are for reference purposes only.

In a second aspect, the present disclosure relates to a process for manufacture of said ceramic filtration elements, wherein the process of manufacture comprises the steps of

a) providing a support structure having a support surface, and a coating suspension comprising the first and second particles;
b) contacting the support surface with the coating suspension for a duration of time, preferably for 10 to 120 seconds, more preferably for 60 seconds or for 30 seconds;
c) removing excess coating suspension without removing a residual film of coating suspension;
d) drying the residual film, preferably for 2 to 6 h at a temperature in the range of from 60 °C to 90 °C; and
e) sintering the support structure with the residual film,
f) optionally repeating steps b) to e), preferably up to 7 times, more preferably up to 5 times.

BRIEF DESCRIPTION OF FIGURES

Fig. 1    Picture of cross section of filtration layer comprising first and second particles obtained by REM after sintering.

Fig. 2    A: Picture of the surface of a filtration layer according to the present disclosure. B: Elemental analysis by Energy Dispersive X-Ray Analysis of the membrane

Fig. 3    Zeta potential of two membranes according to Example 1 comprising 30 wt.-% of $ZrO_2$ as second particles.

DETAILED DESCRIPTION

The present invention relates to ceramic filtration elements as defined in the appended claims. The more generic description is provided for illustrative purposes only. Embodiments not falling under these claims are for reference purposes only.

An object of the present invention is to provide a ceramic filtration element formed on a porous support material and having satisfactory flow, high permeability of low molecular weight compounds and high retention of high molecular weight compounds, including particles of certain size. The filtration element should be easily prepared from suspensions of particles of ceramic compounds at low cost, e.g. without the requirement of high temperatures and without the requirement of inert atmosphere during sintering. Furthermore, an object of the present invention is the provision of filtration elements which exhibit a high stability against thermic, chemical and mechanical stress resulting in a superior abrasion stability and advantageous cleaning properties. Additionally, the skilled person should be able to design the chemical properties of the filtration element, such as the zeta-potential of the membrane surface or the hydrophilic or hydrophobic properties, easily to obtain an optimal filtration element for each purpose of use. By use of metal carbides comprised in the filtration layer, highly hydrophilic properties and low contact angles can be achieved, i.e., the filtration element has a low resistance to the transport of water. Furthermore, filtration elements according to the present disclosure may exhibit a lower tendency of fouling, may be easier to clean and have very high fluxes. For example, a filtration element having an isoelectric point of up to 3 may be prepared from SiC and 30 wt.-% of $ZrO_2$ particles which exhibits unmatched performance in the separation of oil from water.

The inventors of the present disclosure found, surprisingly, that non-oxide ceramic filtration layers can be prepared in a less energy consuming and less expensive way by the addition of small oxide ceramic particles to aid the sintering process during the process of manufacture of the disclosed filtration elements. This is highly desirable because the addition of small metal oxide ceramic particles may not only improve the strength of the membrane coating, but may at the same time reduce the temperature required for the sintering of ceramic particles, and may also eliminate the requirement of inert atmosphere for sintering steps, while the product characteristics of pore size, chemical behavior (e.g. the zeta-potential and inertness), porosity, and filtration performance are maintained. This results in a significant saving in manufacture time and energy consumption.

<u>Definitions</u>

In the sense of the present disclosure, a ceramic filtration element comprises a support structure and a filtration layer. The support structure is a porous material allowing liquids and gases to pass through the support structure. Furthermore, it determines the shape of the filtration element and supports the filtration layer to provide it with mechanical strength and prevent breaking of the filtration element. The filtration layer is directly adjacent to the support structure and constitutes a porous layer with defined pore size which allows liquids and gases to penetrate through the filtration layer. Depending on the size of pores, compounds of a certain molecular weight and / or aggregates of a certain size cannot penetrate through the filtration layer. In a filtration process, said compounds or aggregates comprised in a feed liquid or gas, also regarded to as "feed", cannot pass through the filtration layer, i.e., remain in the feed. The concentration of said compounds and / or particles is thus increased in the feed, whereas the liquid passing through the filtration layer, also regarded to as the "filtrate", does not contain said compounds and / or aggregates, or has a reduced concentration of said compounds and / or aggregates compared to the feed.

In the sense of the present disclosure, the filtration layer comprises at least two different types of particles:

- particles of at least one ceramic compound determining the mean pore size, the porosity, the chemical properties, such as the zeta-potential, hydrophilic or hydrophobic properties, and the stability against corrosive media, such as acids and bases. In the sense of the present disclosure, the particles of a ceramic compound are selected from the group consisting of particles of SiC, $Si_3N_4$, AlN and mixtures thereof. Said particles of a ceramic compound may be regarded as "first particles" for the present disclosure.
- particles of at least one metal oxide serving as a bonding component to provide a strong bonding between the first particles without the requirement of high sinter temperatures and / or inert atmospheres during sintering, and to provide a high mechanical strength and abrasion stability and high chemical stability (without relevant reduction the chemical stability of the layer). Hence, only particles which exhibit a high resistance against aggressive chemicals, such as acids and bases, a high sinter activity at low temperatures, in particular at below 500 °C, and a good bonding to the first particles are suitable materials. In the sense of the present disclosure, the size of this sort of particles is smaller than the size of the first particles. For the present disclosure, this sort of particles is referred to as "second particles". The second particles are selected from the group consisting of $Al_2O_3$, $SlO_2$, $TiO_2$, $ZrO_2$, and mixtures thereof.

In the sense of the present disclosure, the size of a of first and second particles is characterized by their mean diameters $Q_0$, i.e. their numerical $D_{10}$, $D_{50}$ and $D_{90}$ values determined by dynamic light scattering (DLS) if not specified otherwise. $D_{10}$ is defined as the diameter of the particles, wherein the portion of particles with diameters smaller than or equal to this value is 10 % with respect to the total number of particles. Thus, 10 % of the particles in the batch have a diameter smaller than or equal to the value of $D_{10}$, and 90 % of the particles have a diameter larger than the value of $D_{10}$. This is thus a number distribution of the particles. In a similar manner, $D_{50}$ is defined as the diameter of the particles, wherein the portion of particles with diameters smaller than or equal to this value is 50 % with respect to the total number of particles. Finally, $D_{90}$ is defined as the diameter of the particles, wherein the portion of particles with diameters smaller than or equal to this value is 90 % with respect to the total number of particles. In the sense of the present disclosure, all particle diameters are determined by DLS. This can in particular be determined with a Nanotrac Flex nanoparticle size analyzer (obtained from Microtrac MRB).

The particles of the present disclosure can be characterized by their particle size distribution expressed by:

$$Z = \frac{D_{90} \text{ (of particles)}}{D_{10} \text{ (of particles)}}.$$

In other words, the Z-ratio, i.e., Z, is the quotient of the particle size $D_{90}$ of the particles composing the filtration layer and the particle size $D_{10}$ of the same particles composing the filtration layer.

The proportions between the first and second particles can be characterized by their ratio of mean particle diameters expressed by:

$$Y = \frac{D_{50} \text{ (of first particles)}}{D_{50} \text{ (of second particles)}}.$$

In other words, the Y-ratio, i.e., Y, is the quotient of the mean particle size $D_{50}$ of the first particles composing the filtration layer and the mean particle size $D_{50}$ of the second particles composing the filtration layer.

In embodiments of the invention, second particles of the at least one metal oxide are selected from particles from the group consisting of aluminum oxide ($Al_2O_3$), silicone dioxide ($SiO_2$), titanium dioxide ($TiO_2$), zirconium dioxide ($ZrO_2$) and mixtures thereof.

In the sense of the present disclosure, the mean pore size is regarded to as the $D_{90}$ of the pore size, i.e. the size of the pores, wherein the portion of pores with diameters smaller than or equal to this value is 90 % with respect to the total number of pores.

Where the term "comprising" is used in the present disclosure and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

The support structure

According to the present disclosure, the support is formed by a porous material to allow liquids to pass through. The support is formed by a ceramic material. In one embodiment, the support is formed of a metal oxide ceramic material. In another embodiment, the support is formed by a non-oxide ceramic material, e.g. one or more metal carbides or one or more metal nitrides.

In a preferred embodiment, the support has a mean pore size ≤ 30 μm. In another preferred embodiment, the mean pore size may optionally be reduced to a mean pore size ≤ 1.5 μm through the coating of at least one support layer to reduce the mean pore size in a stepwise manner. In this case, the optionally coated support layer is regarded to as the support structure for the present disclosure. The reduction of the pore size of the support through coating of a support layer may result in a lower rate of defects in the filtration layer.

The support may have different shapes. No particular limitation is imposed on the shape of the support. Similarly, no particular limitation is imposed on the shape of the filtration layer which is supported on/in direct contact to the support structure. For example, the support may have the shape of a disk, a polygonal plate, a plate, a flat sheet, a cylinder, a box-like cylinder, a rod, a square pillar, etc. which may be selected in respect of the purpose of use. No limitation is imposed on the dimensions of the support or filtration layer, except for their thickness, and the dimensions may be selected in respect of the purpose of use, as long as the dimensions assure sufficient strength of the support. The person skilled in the art choses the thickness and material of the support in a way to provide the filtration element with a sufficient mechanical strength for the purpose of use.

The first particles

In the embodiments of the invention, the first particles are as defined in claim 1.

In one embodiment, the first particles have a mean diameter $D_{50}$ of from 10 nm to 15 μm. In another embodiment, the first particles have a diameter $D_{50}$ of from 10 nm to 13 μm. In a preferred embodiment, the first particles have a diameter $D_{50}$ of from 10 nm to 10 μm. In another preferred embodiment, the first particles have a diameter $D_{50}$ of from 10 nm to 7 μm. In another preferred embodiment, the first particles have a diameter $D_{50}$ of from 10 nm to 5 μm. In another preferred embodiment, the first particles have a diameter $D_{50}$ of from 10 nm to 4 μm. In another preferred embodiment, the first particles have a diameter $D_{50}$ of from 10 nm to 3 μm. In a preferred embodiment, the first particles have a mean diameter $D_{50}$ of from 20 nm to 2 μm. In another preferred embodiment, the first particles have a mean diameter $D_{50}$ of from 50 nm to 1.75 μm. In another preferred embodiment, the first particles have a mean diameter $D_{50}$ of from 100 nm to 1.5 μm. In another preferred embodiment, the first particles have a mean diameter $D_{50}$ of from 100 nm to 1 μm.

In another embodiment, the first particles additionally have a diameter $D_{90}$ in the range of from 20 nm to 50 μm. In another embodiment, the first particles have a diameter $D_{90}$ in the range of from 20 nm to 40 μm. In another embodiment, the first particles have a diameter $D_{90}$ in the range of from 20 nm to 30 μm. In another embodiment, the first particles have a diameter $D_{90}$ in the range of from 20 nm to 25 μm. In another embodiment, the first particles have a diameter $D_{90}$ in the range of from 20 nm to 20 μm. In another embodiment, the first particles have a diameter $D_{90}$ in the range of from 20 nm to 15 μm. In another embodiment, the first particles have a diameter $D_{90}$ in the range of from 20 nm to 10 μm. In another embodiment, the first particles have a diameter $D_{90}$ in the range of from 20 nm to 6 μm. In a preferred embodiment, the first particles have a diameter $D_{90}$ in the range of from 100 nm to 5,000 nm. In a preferred embodiment, the first particles have a diameter $D_{90}$ in the range of from 200 nm to 4,000 nm. In a preferred embodiment, the first particles have a diameter $D_{90}$ in the range of from 250 nm to 3,000 nm. In a preferred embodiment, the first particles have a diameter $D_{90}$ in the range of from 300 nm to 2,500 nm. In a preferred embodiment, the first particles have a diameter $D_{90}$ in the range of from 400 nm to 2,500 nm. In a preferred embodiment, the first particles have a diameter $D_{90}$ in the range of from 500 nm to 2,500 nm. In a preferred embodiment, the first particles have a diameter $D_{90}$ in the range of from 500 nm to 2,000 nm.

In another embodiment, the first particles have a diameter $D_{50}$ of from 10 nm to 15 $\mu$m, preferably from 10 nm to 13 $\mu$m, further preferably from 10 nm to 10 $\mu$m, further preferably from 10 nm to 7 $\mu$m, further preferably from 10 nm to 5 $\mu$m, further preferably from 10 nm to 4 $\mu$m, further preferably from 10 nm to 3,000 nm, preferably of from 20 nm to 2,000 nm, more preferably of from 50 nm to 1,750 nm, more preferably of from 100 nm to 1,500 nm, most preferably of from 100 nm to 1,000 nm; and preferably $D_{90}$ is in the range of from 20 nm to 6,000 nm, more preferably of from 100 nm to 5,000 nm, more preferably of from 200 nm to 4,000 nm, more preferably of from 250 nm to 3,000 nm, more preferably of from 300 nm to 2,500 nm, more preferably of from 400 nm to 2,500 nm, more preferably of from 400 nm to 2,500 nm, most preferably of from 450 nm to 2,000 nm.

In another embodiment, the first particles have a diameter $D_{50}$ below 15 $\mu$m. In another embodiment, the first particles have a diameter $D_{50}$ below 14 $\mu$m. In another embodiment, the first particles have a diameter $D_{50}$ below 13 $\mu$m. In another embodiment, the first particles have a diameter $D_{50}$ below 12 $\mu$m. In another embodiment, the first particles have a diameter $D_{50}$ below 11 $\mu$m. In another embodiment, the first particles have a diameter $D_{50}$ below 10 $\mu$m. In another embodiment, the first particles have a diameter $D_{50}$ below 9 $\mu$m. In another embodiment, the first particles have a diameter $D_{50}$ below 8 $\mu$m. In another embodiment, the first particles have a diameter $D_{50}$ below 7 $\mu$m. In another embodiment, the first particles have a diameter $D_{50}$ below 6 $\mu$m. In another embodiment, the first particles have a diameter $D_{50}$ below 5 $\mu$m. In another embodiment, the first particles have a diameter $D_{50}$ below 4 $\mu$m. In a preferred embodiment, the first particles have a diameter $D_{50}$ below 3 $\mu$m. In another preferred embodiment, the first particles have a diameter $D_{50}$ below 2,500 nm. In another preferred embodiment, the first particles have a diameter $D_{50}$ below 2,000 nm. In another preferred embodiment, the first particles have a diameter $D_{50}$ below 1,500 nm. In another preferred embodiment, the first particles have a diameter $D_{50}$ below 1,250 nm. In another preferred embodiment, the first particles have a diameter $D_{50}$ below 1,000 nm. In another preferred embodiment, the first particles have a diameter $D_{50}$ below 800 nm. In another preferred embodiment, the first particles have a diameter $D_{50}$ below 700 nm. In another preferred embodiment, the first particles have a diameter $D_{50}$ below 600 nm.

In another embodiment, the first particles have a diameter $D_{50}$ above 5 nm. In another embodiment, the first particles have a diameter $D_{50}$ above 10 nm. In a preferred embodiment, the first particles have a diameter $D_{50}$ above 15 nm. In another preferred embodiment, the first particles have a diameter $D_{50}$ above 20 nm. In another preferred embodiment, the first particles have a diameter $D_{50}$ above 25 nm. In another preferred embodiment, the first particles have a diameter $D_{50}$ above 30 nm. In another preferred embodiment, the first particles have a diameter $D_{50}$ above 35 nm. In another preferred embodiment, the first particles have a diameter $D_{50}$ above 40 nm. In another preferred embodiment, the first particles have a diameter $D_{50}$ above 45 nm. In another preferred embodiment, the first particles have a diameter $D_{50}$ above 50 nm. In another preferred embodiment, the first particles have a diameter $D_{50}$ above 60 nm. In another preferred embodiment, the first particles have a diameter $D_{50}$ above 70 nm. In another preferred embodiment, the first particles have a diameter $D_{50}$ above 80 nm. In another preferred embodiment, the first particles have a diameter $D_{50}$ above 90 nm. In another preferred embodiment, the first particles have a diameter $D_{50}$ above 100 nm.

In another embodiment, the first particles further have a diameter $D_{90}$ below 60 $\mu$m. In another embodiment, the first particles have a diameter $D_{90}$ below 50 $\mu$m. In another embodiment, the first particles have a diameter $D_{90}$ below 40 $\mu$m. In another embodiment, the first particles have a diameter $D_{90}$ below 30 $\mu$m. In another embodiment, the first particles have a diameter $D_{90}$ below 25 $\mu$m. In another embodiment, the first particles have a diameter $D_{90}$ below 20 $\mu$m. In another embodiment, the first particles have a diameter $D_{90}$ below 15 $\mu$m. In another embodiment, the first particles have a diameter $D_{90}$ below 10 $\mu$m. In another embodiment, the first particles have a diameter $D_{90}$ below 6 $\mu$m. In another embodiment, the first particles have a diameter $D_{90}$ below 5 $\mu$m. In another embodiment, the first particles have a diameter $D_{90}$ below 4 $\mu$m. In another embodiment, the first particles have a diameter $D_{90}$ below 3 $\mu$m. In a preferred embodiment, the first particles have a diameter $D_{90}$ below 2,500 nm. In another preferred embodiment, the first particles have a diameter $D_{90}$ below 2,000 nm.

In another embodiment, the first particles have a diameter $D_{90}$ above 10 nm. In another embodiment, the first particles have a diameter $D_{90}$ above 15 nm. In a preferred embodiment, the first particles have a diameter $D_{90}$ above 20 nm. In another preferred embodiment, the first particles have a diameter $D_{90}$ above 30 nm. In another preferred embodiment, the first particles have a diameter $D_{90}$ above 40 nm. In another preferred embodiment, the first particles have a diameter $D_{90}$ above 50 nm. In another preferred embodiment, the first particles have a diameter $D_{90}$ above 70 nm. In another preferred embodiment, the first particles have a diameter $D_{90}$ above 90 nm. In another preferred embodiment, the first particles have a diameter $D_{90}$ above 100 nm. In another preferred embodiment, the first particles have a diameter $D_{90}$ above 150 nm. In another preferred embodiment, the first particles have a diameter $D_{90}$ above 200 nm. In another preferred embodiment, the first particles have a diameter $D_{90}$ above 250 nm. In another preferred embodiment, the first particles have a diameter $D_{90}$ above 300 nm. In another preferred embodiment, the first particles have a diameter $D_{90}$ above 350 nm. In another preferred embodiment, the first particles have a diameter $D_{90}$ above 400 nm.. In another preferred embodiment, the first particles have a diameter $D_{90}$ above 450 nm.

It is understood that any of the aforementioned minimum diameters $D_{50}$ may be combined with any maximum diameter $D_{50}$ defined in an embodiment given hereinabove under the provision that the selected minimum $D_{50}$ is smaller

than the selected maximum $D_{50}$.

It is furthermore understood that any of the aforementioned minimum diameters $D_{90}$ may be combined with any maximum diameter $D_{90}$ defined in an embodiment given hereinabove under the provision that the selected minimum $D_{90}$ is smaller than the selected maximum $D_{90}$.

It is furthermore understood that any of the combinations of $D_{50}$ diameters may be combined with any combination of $D_{90}$ diameters under the provision that the $D_{50}$ diameter is smaller than the $D_{90}$ diameter.

It is also understood that the first particles determine the pore size and the chemical properties of the filtration layer. The first particles exhibit a low sinter activity, why the presence of second particles is necessary.

The second particles

In the embodiments of the invention, the second particles are as defined in claim 1.

The second particles have a mean diameter $D_{50}$ of from 1 nm to 50 nm.

In another embodiment, the second particles have a diameter $D_{90}$ in the range of from 3 nm to 400 nm. In a preferred embodiment, the second particles have a diameter $D_{90}$ in the range of from 3 nm to 300 nm. In a preferred embodiment, the second particles have a diameter $D_{90}$ in the range of from 5 nm to 200 nm. In a preferred embodiment, the second particles have a diameter $D_{90}$ in the range of from 5 nm to 100 nm.

In another embodiment, the second particles have a Z-ratio of below 20. In another embodiment, the second particles have a Z-ratio of below 15. In another embodiment, the second particles have a Z-ratio of below 10. In a preferred embodiment, the second particles have a Z-ratio of from 1 to 7. In another preferred embodiment, the second particles which are $TiO_9$ particles have a Z-ratio of from 1 to 5. In another preferred embodiment, the second particles which are $ZrO_2$ particles have a Z-ratio of from 1 to 3. It is understood from the formula for the calculation of the Z-ratio that the Z-ratio cannot be smaller than 1.

It is understood that small particles of metal oxides have a high sinter activity. Therefore, the second particles have the ability to bond the larger first particles together even at comparably low sinter temperatures and thereby increase the stability of the filtration layer without influencing the pore size or the chemical properties, such as the zeta potential, of the filtration membrane.

The filtration layer

According to the present disclosure, the filtration layer comprises at least two different ceramic particles, i.e. first particles and second particles, and so forth.

The ratio Y is in the range of from 2 to 5,000. In a preferred embodiment, the ratio Y is in the range of from 5 to 4,000. In another preferred embodiment, the Y ratio is in the range of from 5 to 3,000. In another preferred embodiment, the Y ratio is in the range of from 5 to 2,000. In another preferred embodiment, the Y ratio is in the range of from 5 to 1,000. In another preferred embodiment, the Y ratio is in the range of from 10 to 500. In a preferred embodiment, the ratio Y is in the range of from 50 to 400. In another preferred embodiment, the ratio Y is in the range of from 100 to 300. In another preferred embodiment, the ratio Y is in the range of from 150 to 250.

It is understood that any minimum Y ratio given above may be combined with any maximum Y ratio given above.

• Composition of filtration layer

In one embodiment, the first and second particles show a bi modal numerical distribution of particle size. In other words, the first and second particles each have a numerical particle size distribution which overlaps only partially, wherein the intersection of both particle size distributions is not at the maximum of particle numbers of any of the particle size distribution. In a preferred embodiment, the $D_{10}$ of the first particles is larger than the $D_{90}$ of the second particles. In another preferred embodiment, the particle size distributions do not overlap.

The filtration layer comprises second particles in an amount of from 10 wt.-% to 30 wt.-% based on the total weight of the first and second particles.

It is understood that the skilled person can choose the amount of second particles with respect to the amount of first particles individually for every filtration layer depending on the requirements of use. A higher amount of second particles increases the mechanical strength and abrasion stability of the filtration layer. On the other hand, the chemical properties, e.g., the zeta potential, and/or the pore size may be influenced in a negative manner possibly resulting in different filtration properties and/or in a bi-modal distribution of pore size. This may result in an increased risk of membrane blocking and membrane fouling and/or decreased filtrate quality. A lower amount of second particles may decrease the mechanical strength and abrasion stability of the filtration layer because the bonding between the first particles obtained during the sintering process is insufficient. Therefore, the durability may be significantly reduced.

In one embodiment, the filtration layer comprises first and second particles, wherein the first particle is SiC and the second particle is $ZrO_2$. In another embodiment, the filtration layer comprises first and second particles, wherein the first particle is SiC and the second particle is $TiO_2$. In another embodiment, the filtration layer comprises first and second particles, wherein the first particle is SiC and the second particle is $Al_2O_3$. In another embodiment, the filtration layer comprises first and second particles, wherein the first particle is AIN and the second particle is $Al_2O_3$. In another embodiment, the filtration layer comprises first and second particles, wherein the first particle is AIN and the second particle is $ZrO_2$. In another embodiment, the filtration layer comprises first and second particles, wherein the first particle is AIN and the second particle is $TiO_2$. In another embodiment, the filtration layer comprises first and second particles, wherein the first particle is $Si_3N_4$ and the second particle is $Al_2O_3$. In another embodiment, the filtration layer comprises first and second particles, wherein the first particle is $Si_3N_4$ and the second particle is $ZrO_2$. In another embodiment, the filtration layer comprises first and second particles, wherein the first particle is $Si_3N_4$ and the second particle is $TiO_2$. In another embodiment, the filtration layer comprises first and second particles, wherein the first particle is BN and the second particle is $Al_2O_3$. In another embodiment, the filtration layer comprises first and second particles, wherein the first particle is BN and the second particle is $TiO_2$. In another embodiment, the filtration layer comprises first and second particles, wherein the first particle is BN and the second particle is $ZrO_2$. In a preferred embodiment, the filtration layer comprises first and second particles, wherein the first particle is SiC and the second particle is $ZrO_2$. In another preferred embodiment, the filtration layer comprises first and second particles, wherein the first particle is SiC and the second particle is $TiO_2$. In another preferred embodiment, the filtration layer comprises first and second particles, wherein the first particle is SiC and the second particle is $Al_2O_3$. In a more embodiment, the filtration layer comprises first and second particles, wherein the first particle is SiC and the second particle is $ZrO_2$.

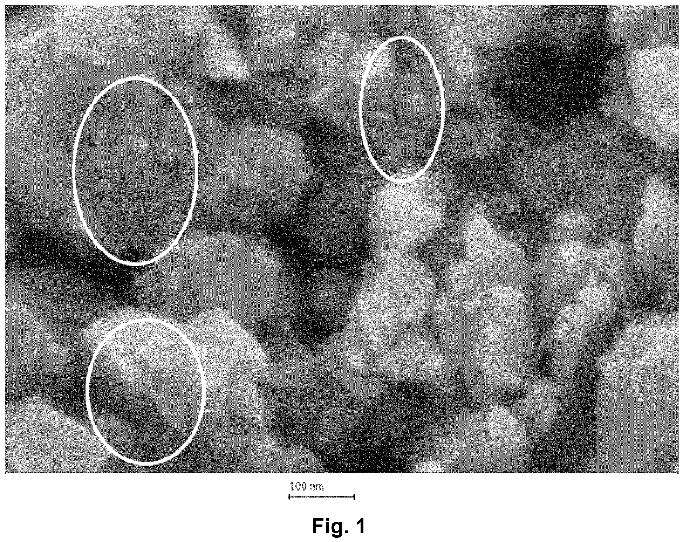

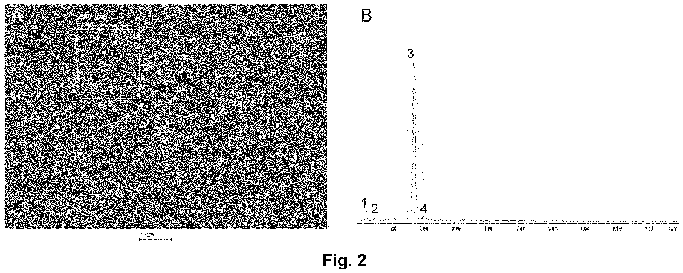

It is understood that the size of the particles comprised in the filtration layer may be determined, e.g. by raster electron microscopy (REM, cf. Figure 1), after their preparation. Furthermore, it is understood that the chemical composition of the filtration layer may be determined after their preparation, e.g. by elemental analysis by Energy Dispersive X-Ray Analysis (cf. Figure 2B).

Figure 1 shows a magnified REM image of a filtration layer comprising SiC particles as first particles and 30 wt.-% of $ZrO_2$ particles as second particles which bind to the larger SiC particles and bind them together (white circles). Detector = InLens; Signal B = MPSE; Signal = 1.0000; EHT = 5.00 kV; Mag = 250.00 KX; WD = 4.0 mm; Image recorded on a Zeiss Leo 15340VP.

Figure 2 shows a REM image of the same filtration element (A) from which an EDX analysis was performed (B). 1: peak for C K; 2: peak for O K; 3: peak for Si K; 4: peak for Zr L. A: Detector = InLens; Signal B = MPSE; Signal = 1.0000; EHT = 5.00 kV; Mag = 250.00 KX; WD = 4.0 mm; Image recorded on a Zeiss Leo 15340VP. B: integrated EDX detector from Zeiss LEO 15340VP.

Additionally, it is understood that the selection of first particles determines the filtration properties of the filtration element. The person skilled in the art can choose the first particles with respect to the intended use of the filtration element.

For example, the pore size and thus the molecular cutoff weight are determined by the first particles. The larger the diameter $D_{50}$ of the first particles, the larger the size of the pores.

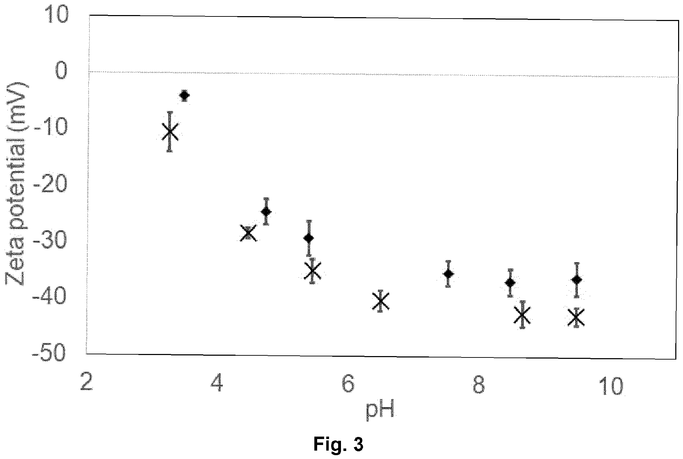

Furthermore, also the zeta potential of the surface of the filtration layer is determined by the choice of first particles. It is known that filtration layers consisting of particles of metal carbides exhibit a typical course of the zeta potential over the range of different pH values, whereas the isoelectric point is in the pH-range of from 2 to 3 (cf. Figure 3). Therefore, the surface of said filtration layers is charged negatively over a broad pH-range, i.e. above 3. This is highly desirable in a variety of filtration task, as negatively charged (organic) compounds are repelled. Therefore, not only the retention of such compounds is improved, but also the tendency of membrane fouling, e.g. the formation of a fouling layer comprising particles and molecules from the feed on top of the filtration layer) is reduced.

Figure 3 shows the slope of the zeta potential in relation to the pH value. Therein, two different elements have been analyzed, both of which comprise SiC as first particles and $ZrO_2$ as second particles. Diamonds: filtration element 1 according to Example 1 comprising 30 wt.-% of $ZrO_2$ as second particles and SiC as first particles. The sintering was performed at 400 °C for 2 h. Cross: filtration element 2 according to Example 1 comprising 30 wt.-% of $ZrO_2$ as second particles and SiC as first particles. The sintering was performed at 500 °C for 2 h.

These advantageous properties are maintained in the filtration layers according to the present disclosure despite the presence of second particles in the filtration layer.

The process of manufacture of ceramic filtration elements

In a second aspect, the present disclosure relates to a process for manufacture of said ceramic filtration elements, wherein the process of manufacture comprises the steps of

a) providing a support structure having a support surface, and a coating suspension comprising the first and second particles;
b) contacting the support surface with the coating suspension for a duration of time, preferably for 10 to 120 seconds, more preferably for 60 seconds or for 30 seconds;

c) removing excess coating suspension without removing a residual film of coating suspension;

d) drying the residual film, preferably for 2 to 6 h at a temperature in the range of from 60 °C to 90 °C; and

e) sintering the support structure with the residual film,

f) optionally repeating steps b) to e), preferably up to 7 times, more preferably up to 5 times.

The present disclosure relates to a method for the production of the ceramic filtration elements described above. Accordingly, a second aspect of the present disclosure relates to a process for manufacturing a multilayer ceramic filtration element according to the first aspect as detailed above, wherein the layers are formed by application of a suspension comprising first and second to a ceramic support structure which is solidified by sintering at low temperature without the requirement of an inert atmosphere.

An advantage of the process for the manufacture of a ceramic filtration element according to the present disclosure is the cost saving and simplification of the process through reducing the requirements as regards temperature and atmosphere.

The process for the preparation of a ceramic filtration element according to the present disclosure comprises the following steps (a) to (f):

(a) For the coating of the filtration layer, a coating suspension is provided in a first step. The coating suspension may be prepared from crystalline powders of first and second particles and a solvent in the presence of a dispersion additive. Optionally, a bonding agent may be comprised in the coating suspension

In one embodiment, the coating suspension comprises a dispersion additive to facilitate optimal mixing and prevent accelerated aggregation of the particles. The dispersion additive may be selected from the group of surfactants, e.g. carbonic acids, fatty alcohols, mineral acids, ammonium salts such as tetramethyl ammonium hydroxide, or polyelectrolytes, such as poly(sodium styrene sulfonate). In a preferred embodiment, the dispersion additive is selected from the group consisting of mineral acids. In another preferred embodiment, the dispersion additive is nitric acid. In another preferred embodiment, the dispersion additive is hydrochloric acid. In another preferred embodiment, the dispersion additive is selected from the group consisting of carbonic acids. In another preferred embodiment, the dispersion additive is acetic acid. In another preferred embodiment, the dispersion additive is tetramethyl ammonium hydroxide.

In one embodiment, the coating suspension comprises a dispersion additive in an amount of up to 5 wt.-%. In another embodiment, the coating suspension comprises a dispersion additive in an amount of up to 3 wt.-%. In a preferred embodiment, the coating suspension comprises a dispersion additive in an amount of from 0.1 wt.-% to 3 wt.-%. In another preferred embodiment, the coating suspension comprises a dispersion additive in an amount of from 0.1 wt.-% to 1 wt.-%.

Furthermore, a bonding agent may be added to facilitate sintering and enhance the strength of bonding. This bonding agent may be selected from a polymer, especially a polyvinyl alcohol, a polyvinyl pyrrolidone, or a cellulose, or a mixture thereof. In a preferred embodiment, the bonding agent is a polyvinyl alcohol. In another preferred embodiment, the cellulose is selected from a methyl cellulose, and a carboxymethyl cellulose, or mixtures thereof.

In another embodiment, a bonding agent is present in an amount of ≤ 15 wt.-% based on the total weight of the coating suspension, preferably in an amount of ≤ 10 wt.-% based on the total weight of the coating suspension. In another embodiment, the bonding agent is present in an amount of at least 0.5 wt.-% based on the total weight of the coating suspension. In another preferred embodiment, the bonding agent is present in an amount of from 0.5 wt.-% to 15 wt.-% based on the total weight of the coating suspension. In another preferred embodiment, the bonding agent is present in an amount of from 0.5 wt.-% to 10 wt.-% based on the total weight of the coating suspension. In another preferred embodiment, the bonding agent is present in an amount of from 0.5 wt.-% to 5 wt.-% based on the total weight of the coating suspension.

In one embodiment, the coating suspension for the coating of the filtration layer comprises second particles in an amount of from 1 wt.-% to 50 wt.-% based on the total weight of the first and second particles. In a preferred embodiment, the coating suspension comprises second particles in an amount of from 5 wt.-% to 40 wt.-% based on the total weight of the first and second particles. In a preferred embodiment, the coating suspension comprises second particles in an amount of from 5 wt.-% to 30 wt.-% based on the total weight of the first and second particles. In a preferred embodiment, the coating suspension comprises second particles in an amount of from 7 wt.-% to 25 wt.-% based on the total weight of the first and second particles. In a preferred embodiment, the coating suspension comprises second particles in an amount of from 10 wt.-% to 25 wt.-% based on the total weight of the first and second particles.

In one embodiment, the coting suspension comprises a mixture of first and second particles as described above in an amount of from 1 wt.-% to 40 wt.-% based on the total weight of the coating suspension. In a preferred embodiment, the coating suspension comprises a mixture of first and second particles as described above in an amount of from 2 wt.-% to 35 wt.-%. In another preferred embodiment, the coating suspension comprises a mixture of first and second particles as described above in an amount of from 3 wt.-% to 30 wt.-%. In another preferred embodiment, the coating suspension comprises a mixture of first and second particles as described above in an amount of from 5 wt.-% to 25 wt.-%. In another preferred embodiment, the coating suspension comprises a mixture of first and second particles as described above in an amount of from 5 wt.-% to 20 wt.-%. In another preferred embodiment, the coating suspension comprises a mixture of first and second particles as described above in an amount of from 7 wt.-% to 15 wt.-%.

In one embodiment, the coating suspension may comprises at least 1 wt.-% of the first particle, based on the total weight of the suspension, preferably the coating suspension may comprise of from 1 wt.-% to 70 wt.-% of the first particle, preferably of from 1 wt.-% to 50 wt.-% of the first particle, more preferably of from 1 wt.-% to 30 wt.-% of the first particle, more preferably wherein the coating suspension may comprise of from 3 wt.-% to 20 wt.-% of the first particle, most preferably wherein the coating suspension may comprise of from 5 wt.-% to 15 wt.-% of the first particle based on the total weight of the coating suspension.

In one embodiment, the coating suspension may comprise at least 0.1 wt.-% of the second particle based on the total weight of the mixture, preferably the coating suspension may comprise of from 0.1 wt.-% to 35 wt.-% of the second particle, preferably of from 0.1 wt.-% to 25 wt.-% of the second particle, more preferably of from 0.1 wt.-% to 15 wt.-%, more preferably of from 0.1 wt.-% to 10 wt.-% of the second particle, more preferably the coating suspension may comprise of from 1 wt.-% to 10 wt.-% of the second particle, most preferably the coating suspension may comprise of from 1 wt.-% to 8 wt.-% of the second particle based on the total weight of the coating suspension.

In one embodiment, the solvent of the coating suspension is water. In another embodiment, the solvent of the coating suspension is selected from aliphatic, linear or branched alcohols comprising one to six carbon atoms. In another embodiment, the solvent comprises DMSO and/or NMP. In a preferred embodiment, the solvent of the coating suspension is water. In another preferred embodiment, the solvent is ethanol. In another preferred embodiment, the solvent is a mixture of water and ethanol. In another preferred embodiment, the solvent is a mixture of water and DMSO. It is understood that the total coating suspension must have a total weight of 100 wt.-%. If not explicitly described otherwise, the solvent constitutes for the weight not specified (e.g. in the examples). It is furthermore understood that the dispersion additives and bonding agents have to be carefully selected to be compatible with the solvent, e.g., soluble and inert/stable.

In one embodiment, the coating suspension may be prepared from base suspensions which comprise a dispersion additive, a solvent, and first or second particles.

The dispersion additive and the solvent comprised in the base suspensions may be the dispersion additives and solvents described above for the coating suspension.

The base suspension may comprise either first or second particles in an amount of from 1 wt.-% to 80 wt.-%. In one embodiment, the base suspension comprises either first or second particles in an amount of from 1 wt.-% to 50 wt.-% based on the total weight of the respective base suspension. In a preferred embodiment, the base suspension comprises either first or second particles in an amount of from 10 wt.-% to 40 wt.-% based on the total weight of the respective base suspension. In another preferred embodiment, the base suspension may comprise either first or second particles in an amount of from 10 wt.-% to 30 wt.-% based on the total weight of the respective base suspension. In another preferred embodiment, the base suspension may comprise either first or second particles in an amount of from 15 wt.-% to 30 wt.-% based on the total weight of the respective base suspension. In another preferred embodiment, the bases suspension comprises first particles in an amount of from 35 wt.-% to 45 wt.-% based on the total weight of the respective base suspension

In one embodiment, the base suspension comprising first particles may further comprise a dispersion additive in an amount of from 0.1 wt.-% to 5 wt.-% based on the total weight of the base suspension. In another embodiment, the base suspension comprising first particles may further comprise a dispersion additive in an amount of from 0.1 wt.-% to 4 wt.-% based on the total weight of the base suspension. In another embodiment, the base suspension comprising first particles may further comprise a dispersion additive in an amount of from 0.1 wt.-% to 2 wt.-% based on the total weight of the base suspension. In a preferred embodiment, the base suspension comprising first particles may further comprise a dispersion additive in an amount of from 0.1 wt.-% to 2 wt.-% based on the total weight of the base suspension. In another preferred embodiment, the base suspension comprising first particles may further comprise a dispersion additive in an amount of from 0.1 wt.-% to 1 wt.-% based on the total weight of the base suspension

In one embodiment, the base suspension comprising second particles may further comprise a dispersion additive in an amount of from 1 wt.-% to 20 wt.-% based on the total weight of the base suspension. In another embodiment, the base suspension comprising second particles may further comprise a dispersion additive in an amount of from 1 wt.-% to 15 wt.-% based on the total weight of the base suspension. In another embodiment, the base suspension comprising second particles may further comprise a dispersion additive in an amount of from 1 wt.-% to 10 wt.-% based on the total weight of the base suspension. In a preferred embodiment, the base suspension comprising second particles may further comprise a dispersion additive in an amount of from 2 wt.-% to 10 wt.-% based on the total weight of the base suspension. In another preferred embodiment, the base suspension comprising second particles may further comprise a dispersion additive in an amount of from 3 wt.-% to 7 wt.-% based on the total weight of the base suspension

In one embodiment, the coating suspension may be prepared by mixing the components comprised therein, e.g., first and second particles, dispersion additive, bonding agent, and solvent.

In another embodiment, the coating suspension may be prepared by mixing the base suspensions comprising first and second nanoparticles with a bonding agent and a solvent.

Mixing may be achieved by input of mechanical energy to obtain a uniform distribution of particles in the coating suspension. Mechanical energy may be applied through stirring, shaking or milling with an energy input of from approximately 0.1 kWh / kg of suspension to approximately 15 kWh / kg of suspension.

(b) In another step of the process of manufacture, the filtration layer is formed through contacting the surface of the support structure with the coating suspension. In a preferred embodiment, support structure is in the shape of a tube. For coating, the tube is arranged vertically and the tube is filled with coating suspension by a pump. In another preferred embodiment, the tube is filled completely.

The coating suspension is contacted to the support surface for a dwell time. In one embodiment, the coating suspension is contacted with the support for a dwell time of less than 120 seconds. In a preferred embodiment, the coating suspension is contacted with the support for a dwell time of up to 60 seconds. In another preferred embodiment, the suspension is contacted with the support for a dwell time of 60 seconds. In another preferred embodiment, the suspension is contacted with the support for a dwell time of 30 seconds. In another embodiment, the suspension is contacted with the support for a dwell time of at least 10 seconds. In a preferred embodiment, the suspension is contacted with the support for a dwell time of from 10 seconds to 120 seconds. In another preferred embodiment, the suspension is contacted with the support for a dwell time of from 10 seconds to 60 seconds. In another preferred embodiment, the suspension is contacted with the support for a dwell time of 30 seconds or 60 seconds.

After the dwell time, the coating suspension is removed carefully, leaving a film on the support. In one embodiment, the suspension is bled out of the tube leaving a film of coating suspension on the surface of the support. The thickness of the film left on the surface of the support can be controlled by the dwell time through the effect of concentration polarization and the shear forces caused by the velocity of the coating suspension during the drainage from the surface. The first and second particles form a layer on top of the support through interlocking between the particles and adhesion forces which are enhanced by capillary effects of the solid support structure below the film. The layer thickness is controlled by the dwell time and the concentration of particles in the coating suspension.

(c) Afterwards, the residual film of coating suspension is dried. In one embodiment, the film is dried under air atmosphere. In another embodiment, the film is dried under air atmosphere at room temperature. In a preferred embodiment, the film is dried for at least 12 h. In another embodiment, the film is dried at a temperature of from 60 °C to 90 °C under an air atmosphere. In a more preferred embodiment, the film is dried at a temperature of from 60 °C to 90 °C under an air atmosphere for 2 h to 6 h.

The dried film is submitted to a sintering process.

(d) In a next step of the process of manufacture, the dried films are solidified through a sintering step.

The skilled person is aware, that the sintering of films comprising particles of at least one metal carbide or at least one metal nitride usually requires high temperatures of about 2,000 °C. Under this conditions, particularly at temperatures above 900 °C, metal carbides and metal nitrides are particularly prone to oxidations and rapidly form metal oxides. Therefore, the sintering of particles of at least one metal carbide or nitride usually requires the exclusion of oxygen, e.g. through replacement of the atmosphere with an inert atmosphere or through applying a vacuum, to prevent oxidation, also referred to "formation of glass" (e.g. when carbides or nitrides of silicone are used) in the sense of the present disclosure.

The inventors of the present disclosure, however, surprisingly found that the sinter temperatures can be substantially reduced to temperatures below the critical temperature of 900 °C due to the high sinter activity of the second particles selected from the group of at least one metal oxide as a consequence of their small size. The second particles may bind the larger first particles together, connecting them in a very strong way and forming a highly durable filtration layer. In addition, the properties of the filtration layer are mainly determined by the inherent properties of the first particles.

In one embodiment, wherein the first particles are selected from the group of at least one metal carbide or at least one metal nitride, the step of sintering may be performed at a temperature in the range of from 300 °C to 900 C. In another embodiment, wherein the first particles are selected from the group of at least one metal carbide or at least one metal nitride, the step of sintering may be performed at a temperature in the range of from 400 °C to 900 C. In a preferred embodiment, wherein the first particles are selected from the group of at least one metal carbide or at least one metal nitride, the step of sintering may be performed at a temperature in the range of from 400 °C to 700 C.

It is understood that said metal carbides or metal nitrides do not undergo oxidation at the temperatures described. Therefore, in one embodiment, the sintering step may be conducted under an atmosphere comprising oxygen in an amount below 50 % (V/V). In another embodiment, the sintering step may be conducted under an atmosphere comprising oxygen in an amount below 40 % (V/V). In another embodiment, the sintering step may be conducted under an atmosphere comprising oxygen in an amount below 30 % (V/V). In another preferred embodiment, the step of sintering may be conducted under an atmosphere of air.

In another aspect of the present disclosure, films comprising first particles selected from the group of at least one metal oxide may be sintered at reduced temperature due to the high sinter activity of the second particles which has been described above.

In one embodiment, wherein the first particles are selected from the group of at least one metal oxide, the step of sintering may be performed at a temperature in the range of from 300 °C to 1,400 C. In another embodiment, wherein the first particles are selected from the group of at least one metal oxide, the step of sintering is performed at a temperature in the range of from 300 °C to 1,200 C. In a preferred embodiment, wherein the first particles are selected from the group of at least one metal oxide, the step of sintering is performed at a temperature in the range of from 400 °C to 900 C. In another preferred embodiment, wherein the first particles are selected from the group of at least one metal oxide, the step of sintering is performed at a temperature in the range of from 400 °C to 700 C.

In one embodiment, the step of sintering may be performed at a temperature in the range of from 300 °C to 1,200 C. In another embodiment, the step of sintering is performed at a temperature in the range of from 400 °C to 1,100 C. In a preferred embodiment, the step of sintering is performed at a temperature in the range of from 400 °C to 900 C. In another preferred embodiment, the step of sintering is performed at a temperature in the range of from 400 °C to 700 C.

It is understood that the temperatures described above are substantially lower than the sinter temperatures used so far. Therefore, the process of manufacture according to the present disclosure is improved in that it requires less energy and less efforts with regard to the sinter atmosphere, while the mechanical strength and filtration properties, such as pore size and zeta potential, of the filtration layer are maintained or even improved.

In one embodiment, the filtration elements to be sintered may be heated up to the sinter temperature at a rate of from up to 20 °C/min. In another embodiment, the filtration elements to be sintered may be heated up to the sinter temperature at a rate of from up to 15 °C/min. In another embodiment, the filtration elements to be sintered may be heated up to the sinter temperature at a rate of from up to 10 °C/min. In a preferred embodiment, the filtration elements to be sintered may be heated up to the sinter temperature at a rate of from 1 °C/min to 10 °C/min. In another preferred embodiment, the filtration elements to be sintered may be heated up to the sinter temperature at a rate of from 1 °C/min to 5 °C/min.

It is understood that raising the temperature too quickly may result in thermal stress and cracks in the support structure and/or in the filtration layer which may reduce the durability and limit the usability of the filtration elements.

In one embodiment, the filtration elements may be kept at the sinter temperature for a time of from 10 minutes to 600 minutes. In another embodiment, the filtration elements may be kept at the sinter temperature for a time of from 20 to 500 minutes. In another embodiment, the filtration elements may be kept at the sinter temperature for a time of from 20 to 400 minutes. In another embodiment, the filtration elements may be kept at the sinter temperature for a time of from 20 to 300 minutes. In a preferred embodiment, the filtration elements may be kept at the sinter temperature for a time of from 30 to 300 minutes. In another preferred embodiment, the filtration elements may be kept at the sinter temperature for a time of from 30 to 240 minutes.

It is understood that the skilled person selects the time of the sintering step in accordance to the temperature and the sinter activity of the second particles. If the sintering time is chosen too short, the second particles cannot bond the first particles tightly together which results in a low mechanical strength and low stability against chemical stresses of the filtration layer.

In one embodiment, the filtration elements may be cooled down to room temperature after the sintering at a rate of from up to 20 °C/min. In one embodiment, the filtration elements may be cooled down to room temperature after the sintering at a rate of from up to 15 °C/min. In one embodiment, the filtration elements may be cooled down to room temperature after the sintering at a rate of from up to 10 °C/min. In a preferred embodiment, the filtration elements may be cooled down to room temperature after the sintering at a rate of from 1 °C/min to 10 °C/min. In another preferred embodiment, the filtration elements may be cooled down to room temperature after the sintering at a rate of from 1 °C/min to 5 °C/min. In another preferred embodiment, the filtration elements may be cooled down to room temperature after the sintering at a rate determined by the oven used without the application of external cooling.

It is understood that a quicker cooling, e.g. by thermo shock cooling, may result in thermal stresses and cracks within the support structure and/or the filtration layer.

(f) In one embodiment, the steps (b) to (d) of the process of manufacture can be repeated with the same suspension obtained in step (a) until the desired thickness of the filtration layer is obtained. In preferred embodiments, all steps (b) to (d) are conducted at least once with the same suspension obtained in step (a). In another preferred embodiment, the steps (b) to (d) of the process are not conducted more than six times. In another preferred embodiment, the steps (b) to (d) are conducted up to four times using the same suspension obtained in step (a).

It is understood that in the second and any further repetition of the steps (b) to (d), the support cannot be coated because there is a layer coated on it during the first or preceding manufacturing cycle. In this cases, an additional layer may be coated onto the already existing layer, wherein it is favorable to obtain a thin filtration layer.

In the sense of the present disclosure, single layers consisting of the same materials with regard to the chemical composition and particle size are regarded to as one layer, i.e. the filtration layer.

EXAMPLES

Example 1: Preparation of non-oxide ceramic filter membrane through sintering at low temperature

Preparation of base solution

Crystalline ceramic nanoparticles are obtained from commercial suppliers or milled until the desired particle size is obtained. The mean particle size is given as the numerical $D_{10}$, $D_{50}$ and $D_{90}$ values which are determined by dynamic light scattering (DLS) prior to coating with a NANO-flex maschine (obtained from Microtrac Europe GmbH).

A dispersion additive (e.g. acetic acid or tetramethyl ammonium hydroxide) is mixed with water until a homogeneous solution is obtained. Subsequently, the silicon carbide ceramic powder ($D_{10}$ = 280 nm, $D_{50}$ = 520 nm, $D_{90}$ = 1060 nm; Z = 3.8) is added under vigorous stirring. In order to obtain a mechanical dispersion with adequate distribution of particles, mechanical energy is applied by means of a perl mill. The application of milling energy depends on ceramic particle size and is chosen in a range of from 0.1 kWh/kg to 15 kWh/kg of suspension. In this way, a base suspension can be obtained containing a 3 / 1 mixture of solvent and the crystalline ceramic nanoparticle with regard to their weight ratio (weight (solvent) / weight (nanoparticle)) and dispersion additive.

In a similar way, a base suspension of the oxide ceramic nanoparticle comprising zirconium oxide nanoparticles ($D_{10}$ = 2 nm, $D_{50}$ = 3 nm, $D_{90}$ = 5 nm; Z = 2.5; 4 / 1 mixture of solvent and the crystalline ceramic nanoparticle with regard to their weight ratio (weight (solvent) / weight (nanoparticle)) is prepared.

Coating suspension

Prior to the process of coating, both base suspensions are diluted with water and a bonding agent is added while stirring. The amount of nanoparticle in the suspension is always expressed in weight-% (wt.-%) unless specified otherwise.

A suitable coating suspension has the following composition:

- Solvent: $H_2O$ (42 wt.-%)

- SiC base suspension (40 wt.-%)

- $ZrO_2$ base suspension (15 wt.-%)

- 20 wt.-% aqueous solution of polyvinyl alcohol (3 wt.-%)

Coating on support

The aforementioned coating suspension is filled into the inside of vertically oriented ceramic support tubes. The solution is left in the support tubes for a time of 60 seconds after which the coating suspension is bled. The remaining film on the inner surface of the tube is left to dry. Afterwards, that the coated tubes can be sintered under the conditions given in Table 1 until sufficient strength is obtained.

Characterization of ceramic filter membranes

• Filtration

A dispersion of oil in water (pH 6-8) was prepared. The concentration of oil was set to higher than 5200 ppm and the dispersion was mixed to obtain oil droplets of a size $D_{3,50}$ of approximately 1.4 $\mu$m. In this case, $D_{3,50}$ is the volumetric $D_{50}$ value. In other words, $D_{3,50}$ is defined as the diameter of the particles, wherein the volume of particles with diameters smaller than or equal to this value is 50 % with respect to the total volume of particles. The dispersion was pumped through ceramic hollow fibers with SiC/ZrO2 membrane coating on the inner surface at a cross-flow of 2.0 m/s and a transmembrane pressure of 0.5 bar at a temperature of 40 °C.

During the filtration trial, the flow remained constant over 7 days without a backflush indicating the negative surface charge of the filtration layer and low fouling tendency.

In the permeate, less than 1 ppm of oil was found. On the other hand, over 99.9 % of the oil was retained in the feed dispersion. This experiment reveals excellent filtration properties of the filtration element.

• Zeta potential

The membranes were further characterized by measuring their zeta potential (cf. figure 3) with a SurPASS 3 maschine obtained from Anton Paar. For conducting the analysis, deionized water, potassium chloride (purity $\geq$ 99.5 %, obtained from Roth), a 0.01 N solution of KOH (obtained from roth) as a base and a 0.1 N aqueous solution of HCl (obtained from Roth) were used. The measurement was carried out at room temperature (23 - 26 °C) and the solution contained KCl at a concentration of 1 mmol/L (conductivity 11 mS/m, Volume 530 mL).

The measurement of the zeta potential reveals that the characteristic shape of the typical curve obtained for silicon carbide was conserved despite the addition of an oxide ceramic nanoparticle as a binding phase (cf. Figure 3). Therefore, the membranes of the present disclosure have the same low tendency of fouling as compared to non-oxide ceramic filter membranes due to the strongly hydrophilic character of the membranes and the repellant properties for components with a negative charge over a broad range of pH values.

• Coating strength with and without chemical impact

The coating strength was measured for membranes coated on the outside of ceramic hollow fibers before and after chemical impact to assess the mechanical properties of the ceramic filter membrane. Chemical impact was applied by means of storing the membranes in a strongly basic solution (pH = 14) containing NaOH at 95°C for a period of 4 days.

Mechanical abrasion was tested by a hand abrasion test, comprising strong rubbing of the membranes with a pointer and thumb.

**Table 1** Results of hand abrasion testing of ceramic membrane coatings on ceramic hollow fibers (outside) <u>before</u> chemical impact

| | Coating strength | | | | | |
|---|---|---|---|---|---|---|
| Sinter temperature | 400°C | 500°C | 600°C | 700°C | 800°C | 900°C |
| SiC (comparative membrane) | --- | --- | --- | --- | --- | ++ |
| SiC / ZrO$_2$ (15 wt.-%) | ++ | +++ | +++ | +++ | +++ | +++ |
| SiC / ZrO$_2$ (30 wt.-%) | +++ | +++ | +++ | +++ | +++ | +++ |
| SiC/TiO$_2$ (15 wt.-%) | -- | + | + | ++ | +++ | +++ |

**Table 2** Results of hand abrasion testing of ceramic membrane coatings on ceramic hollow fibers (outside) <u>after</u> chemical impact

| | Coating strength | | | | | |
|---|---|---|---|---|---|---|
| Sinter temperature | 400°C | 500°C | 600°C | 700°C | 800°C | 900°C |
| SiC (comparative membrane) | n.d. | - - - | n.d. | - - - | n.d. | - - - |
| SiC / ZrO$_2$ (15 wt.-%) | + | + | + | - | n.d. | - - - |
| SiC / ZrO$_2$ (30 wt.-%) | +++ | +++ | +++ | +++ | +++ | +++ |
| SiC / TiO$_2$ (15 wt.-%) | n.d. | - - | -- | -- | n.d. | - - - |

n.d. = not determined; - - -: very low coating strength, coating can be completely rubbed off easily; - -:low coating strength, coating can partially be rubbed off easily; -: low coating strength, coating can partially be rubbed off using low pressure; +: medium coating strength, coating can partially be rubbed off using high pressure; + +: high coating strength, coating can be rubbed to to a minor amount using high pressure; + + +: very high coating strength, coating cannot be rubbed off despite using very high pressure. Numbers given in wt.-% express the amount of second particle based on the total weight of first and second particles. SiC powder used has $D_{10}$ = 280 nm, $D_{50}$ = 520 nm, $D_{90}$ = 1060 nm; ZrO$_2$ powder used has $D_{10}$ = 2 nm, $D_{50}$ = 3 nm, $D_{90}$ = 5 nm; TiO$_2$ powder used has $D_{10}$ = 12-17 nm, $D_{50}$ = 17-22 nm, $D_{90}$ = 25-35 nm.

The hand abrasion test reveals that the membranes of the present disclosure have a much higher stability against mechanic stress than membranes prepared from silicon carbide alone. Thereby, the sintering temperature is significantly reduced for the membranes of the present disclosure as compared to the comparative membrane. Even after a strong chemical impact, the membranes of the present disclosure show a good mechanical strength indicating their durability and high relevance for filtration purposes, especially in corrosive media.

Example 2: Preparation of oxide ceramic filter membrane through sintering at low temperature (not according to the invention)

Crystalline ceramic oxide particles are obtained from commercial suppliers or milled until the desired particle size and shape is obtained. The mean particle size is given as the numerical $D_{10}$, $D_{50}$ and $D_{90}$ values which are determined by DLS prior to coating.

A dispersion additive (i.e. acetic acid) is mixed with water until a homogeneous solution is obtained. Subsequently, an $Al_2O_3$ powder ($D_{10}$ = 140 nm, $D_{50}$ = 250nm, $D_{90}$ = 450 nm; Z = 3.2) is added under vigorous stirring. In order to obtain a mechanical dispersion with adequate distribution of particles, mechanical energy is applied by means of a pearl mill. The application of milling energy depends on ceramic particle size and is chosen in a range of from 0.1 kWh/kg to 15 kWh/kg of suspension. In this way, a base suspension can be obtained containing a 3 / 2 mixture of solvent and the crystalline ceramic nanoparticle with regard to their weight ratio (weight (solvent) / weight (nanoparticle)) and dispersion additive.

In a similar way, a base suspension of the oxide ceramic nanoparticle comprising zirconium oxide nanoparticles ($D_{10}$ = 2 nm, $D_{50}$ = 3 nm, $D_{90}$ = 5 nm; Z = 2.5; 4 / 1 mixture of solvent and the crystalline ceramic nanoparticle with regard to their weight ratio (weight (solvent) / weight (nanoparticle)), or titanium oxide nanoparticles (referred to as $TiO_2$-1 ; $D_{10}$ = 14 nm, $D_{50}$ = 18 nm, $D_{90}$ = 28 nm; Z = 2; 4 / 1 mixture of solvent and the crystalline ceramic nanoparticle with regard to their weight ratio (weight (solvent) / weight (nanoparticle)) or titanium oxide nanoparticles (referred to as $TiO_2$-2; $D_{10}$ = 29 nm, $D_{50}$ = 38 nm, $D_{90}$ = 59 nm; Z = 2; 4 / 1 mixture of solvent and the crystalline ceramic nanoparticle with regard to their weight ratio (weight (solvent) / weight (nanoparticle)) are prepared.

Coating suspension

Prior to the process of coating, both base suspensions are diluted with water and a bonding agent is added while stirring as exemplified by the following composition:

- Solvent ($H_2O$): 66.0 wt.-%

- Base suspension ($Al_2O_3$): 25.0 wt.-%

- Base suspension ($ZrO_2$): 6.0 wt.-%

- Bonding agent (20 wt.-% polyvinyl alcohol in $H_2O$): 3.0 wt.-%

Coating on support

The aforementioned coating suspension is filled into the inside of vertically oriented ceramic support tubes. The solution is left in the support tubes for a time of 60 seconds after which the coating suspension is bled. The remaining film on the inner surface of the tube is left to dry. Afterwards, that the coated tubes can be sintered until sufficient strength is obtained.

Characterization of oxide ceramic filter membranes

• Measurement of pore size

The pore size $D_{90}$ was determined as 30 to 40 nm by flow porometry. Although filtration elements of this class do not exhibit lower tendency of fouling, the filtration elements can be manufactured easily and at low energy consumption.

• Coating strength without chemical impact

Furthermore, the filtration layer shows an improved mechanical strength and abrasion stability. Mechanical abrasion was tested by a hand abrasion test, comprising strong rubbing of the membranes with a pointer and thumb.

Table 3 Results of hand abrasion testing of oxide ceramic membrane coatings

| Sinter temperature | 500°C | 600°C | 700°C | 900°C |
|---|---|---|---|---|
| $Al_2O_3$ (comparative membrane) | --- | --- | --- | ++ |
| $Al_2O_3$ / $ZrO_2$ (12 wt.-%) | + | +++ | +++ | +++ |
| $Al_2O_3$ / $TiO_2$-1 (12 wt.-%) | - | ++ | +++ | +++ |
| $Al_2O_3$ / $TiO_2$-2 (12 wt.-%) | - | + | ++ | +++ |

- - - : very low coating strength, coating can be completely rubbed off easily; - -:low coating strength, coating can partially be rubbed off easily; -: low coating strength, coating can partially be rubbed off using low pressure; +: medium coating strength, coating can partially be rubbed off using high pressure; + +: high coating strength, coating can be rubbed off to a minor amount using high pressure; + + +: very high coating strength, coating cannot be rubbed off despite using very high pressure. Numbers given in wt.-% express the amount of second particle based on the total weight of first and second particles. $Al_2O_3$ powder used has $D_{10}$ = 140 nm, $D_{50}$ = 250 nm, $D_{90}$ = 450 nm; $ZrO_2$ powder used has $D_{10}$ = 2 nm, $D_{50}$ = 3 nm, $D_{90}$ = 5 nm; $TiO_2$-1 powder used has $D_{10}$ = 14 nm, $D_{50}$ = 18 nm, $D_{90}$ = 28 nm. $TiO_2$-2 powder used has $D_{10}$ = 29 nm, $D_{50}$ = 38 nm, $D_{90}$ = 59 nm.

## Claims

1. A ceramic filtration element prepared by a process for manufacture of a ceramic filtration element, wherein the process of manufacture comprises the steps of

   a) providing a support structure having a support surface, and a coating suspension comprising the first and second particles;
   b) contacting the support surface with the coating suspension for a duration of time;
   c) removing excess coating suspension without removing a residual film of coating suspension;
   d) drying the residual film; and
   e) sintering the support structure with the residual film; and wherein

   the ceramic filtration element comprising a support structure and a filtration layer, wherein the filtration layer comprises at least first particles and second particles, wherein the second particles are selected from the group consisting of oxide ceramic particles, and wherein the first and second particles differ in at least their numerical $D_{50}$ diameter, **characterized in that** the ratio (Y) of the numerical $D_{50}$ diameter of the first particles and the numerical $D_{50}$ diameter of the second particles is in the range of 2 to 5,000, wherein
   the first particles are selected from the group consisting of SiC, $Si_3N_4$, AIN, and mixtures thereof; and wherein
   the second particles have a numerical $D_{50}$ diameter of from 1 nm to 50 nm; and wherein
   the second particles are selected from the group consisting of $Al_2O_3$, $SiO_2$, $TiO_2$, $ZrO_2$, and mixtures thereof; and wherein
   the numerical $D_{50}$ diameters of the first and second particles are determined by dynamic light scattering, wherein
   the second particle is present in an amount of from 10 wt.-% to 30 wt.-% based on the total weight of the first and second particles, and wherein
   the numerical $D_{50}$ diameter is defined as the diameter of the particles, wherein the portion of particles with diameters smaller than or equal to this value is 50 % with respect to the total number of particles.

2. The ceramic filtration element according to claim 1, wherein the first particles are selected from the group consisting of SiC, $Si_3N_4$, AIN, and mixtures thereof, and wherein the ratio Y is in the range of 5 to 3,000, preferably 5 to 1,000, further preferably 50 to 400, still further preferably 150 to 250.

3. The ceramic filtration element according to claim 1, wherein the ratio Y is below 4,000, preferably below 2,000, further preferably below 1,500, further preferably below 800, further preferably below 600, more preferably below 300,; or wherein the ratio Y is above 10, still more preferably above 100.

4. The ceramic filtration element according to any one of claims 1 to 3, wherein the first particle is AIN and the second particle is $Al_2O_3$,or wherein the first particle is AIN and the second particle is $ZrO_2$, or wherein the first particle is

AlN and the second particle is $TiO_2$.

5. The ceramic filtration element according to any one of claims 1 to 3, wherein the first particle is $Si_3N_4$ and the second particle is $Al_2O_3$, or wherein the first particle is $Si_3N_4$ and the second particle is $ZrO_2$, or wherein the first particle is $Si_3N_4$ and the second particle is $TiO_2$.

6. The ceramic filtration element according to any one of claims 1 to 3, wherein the first particle is SiC and the second particle is $ZrO_2$, or wherein the first particle is SiC and the second particle is $TiO_2$, or wherein the first particle is SiC and the second particle is $Al_2O_3$, preferably wherein the first particle is SiC and the second particle is $ZrO_2$.

7. The ceramic filtration element according to any one of the preceding claims wherein the second particles have a numerical $D_{90}$ diameter in the range of from 3 nm to 400 nm, further preferably of from 3 nm to 300 nm, more preferably of from 5 nm to 200 nm, most preferably of from 5 nm to 100 nm, wherein the numerical $D_{90}$ diameter of the second particles is determined by dynamic light scattering, and wherein the numerical $D_{90}$ diameter is defined as the diameter of the particles, wherein the portion of particles with diameters smaller than or equal to this value is 90 % with respect to the total number of particles.

8. The ceramic filtration element according to any one of the preceding claims wherein the first particles have a numerical $D_{50}$ diameter of from 10 nm to 15 $\mu$m, preferably of from 10 nm to 10 $\mu$m, further preferably of from 10 nm to 5 $\mu$m, further preferably of from 10 nm to 3 $\mu$m, more preferably of from 50 nm to 1,750 nm, most preferably of from 100 nm to 1,000 nm, wherein the numerical $D_{50}$ diameter of the first particles is determined by dynamic light scattering.

9. The ceramic filtration element according to claim 8, wherein the first particles have a numerical $D_{90}$ diameter in the range of from 20 nm to 6 $\mu$m, preferably of from 100 nm to 5 $\mu$m, more preferably of from 250 nm to 3 $\mu$m, more preferably of from 400 nm to 2.5 $\mu$m, most preferably of from 450 nm to 2 $\mu$m, wherein the numerical $D_{90}$ diameter of the first particles are determined by dynamic light scattering, and wherein the numerical $D_{90}$ diameter is defined as the diameter of the particles, wherein the portion of particles with diameters smaller than or equal to this value is 90 % with respect to the total number of particles.

10. A process for manufacture of a ceramic filtration element according to any one of the preceding claims, wherein the process of manufacture comprises the steps of

   a) providing a support structure having a support surface, and a coating suspension comprising the first and second particles;
   b) contacting the support surface with the coating suspension for a duration of time, preferably for 10 to 120 seconds, more preferably for 60 seconds or for 30 seconds;
   c) removing excess coating suspension without removing a residual film of coating suspension;
   d) drying the residual film, preferably for 2 to 6 h and at a temperature in the range of from 60 °C to 90 °C; and
   e) sintering the support structure with the residual film,
   f) optionally repeating steps b) to e), preferably up to 7 times, more preferably up to 5 times.

11. The process according claim 10 for the manufacture of a ceramic filtration element according to any one of the claims 1 to 9, wherein the first particles are selected from the group consisting of SiC, $Si_3N_4$, AlN, and mixtures thereof, wherein the step of sintering is performed at a temperature in the range of from 300 °C to 900 °C, preferably within the range of from 400 °C to 900 °C, more preferably within the range of from 400 °C to 700 °C.

12. The process according to any one of claims 10 or 11, wherein the step of sintering is performed in an atmosphere comprising oxygen, preferably in air atmosphere.

13. The process according to any one of claims 10 to 12, wherein the coating suspension comprises at least 1 wt.-% of the first particle, based on the total weight of the mixture, preferably wherein the coating suspension comprises of from 1 wt.-% to 70 wt.-% of the first particle, more preferably of from 1 wt.-% to 30 wt.-% of the first particle, most preferably wherein the coating suspension comprises of from 5 wt.-% to 15 wt.-% of the first particle.

14. The process according to any one of claims 10 to 13, wherein the coating suspension comprises at least 0.1 wt.-% of the second particle based on the total weight of the mixture, preferably of from 0.1 wt.-% to 25 wt.-% of the second particle, more preferably of from 0.1 wt.-% to 10 wt.-% of the second particle, most preferably wherein the coating

**EP 3 991 830 B1**

suspension comprises of from 1 wt.-% to 8 wt.-% of the second particle.

**Patentansprüche**

1. Ein keramisches Filtrationselement, hergestellt durch ein Verfahren zur Herstellung eines keramischen Filtrationselements, wobei das Verfahren zur Herstellung die Schritte

   a) Bereitstellen einer Trägerstruktur mit einer Trägeroberfläche und einer Beschichtungssuspension, die die ersten und zweiten Partikel enthält;
   b) Inkontaktbringen der Trägeroberfläche mit der Beschichtungssuspension für eine Zeitdauer;
   c) Entfernen überschüssiger Beschichtungssuspension ohne Entfernen eines Restfilms der Beschichtungssuspension;
   d) Trocknen des Restfilms; und
   e) Sintern der Trägerstruktur mit dem Restfilm

   umfasst; und wobei

   das keramische Filtrationselement eine Trägerstruktur und eine Filtrationsschicht umfasst, wobei die Filtrationsschicht mindestens erste Partikel und zweite Partikel umfasst, wobei die zweiten Partikel aus der Gruppe ausgewählt sind, die aus oxidkeramischen Partikel besteht, und wobei die ersten und zweiten Partikel sich mindestens in ihrem numerischen $D_{50}$ Durchmesser unterscheiden, **dadurch gekennzeichnet, dass** das Verhältnis (Y) des numerischen $D_{50}$ Durchmessers der ersten Partikel und des numerischen $D_{50}$ Durchmessers der zweiten Partikel im Bereich von 2 bis 5.000 liegt, wobei
   die ersten Partikel ausgewählt sind aus der Gruppe bestehend aus SiC, $Si_3N_4$, AlN und Mischungen davon; und wobei
   die zweiten Partikel einen numerischen $D_{50}$ Durchmesser von 1 nm bis 50 nm haben; und wobei
   die zweiten Partikel ausgewählt sind aus der Gruppe bestehend aus $Al_2O_3$, $SiO_2$, $TiO_2$, $ZrO_2$ und Mischungen davon; und wobei
   die numerischen $D_{50}$ Durchmesser der ersten und zweiten Partikel durch dynamische Lichtstreuung bestimmt werden, wobei
   der zweite Partikel in einer Menge von 10 Gew.-% bis 30 Gew.-% bezogen auf das Gesamtgewicht der ersten und zweiten Partikel, vorhanden ist, und wobei der numerische $D_{50}$ Durchmesser definiert ist als der Durchmesser der Partikel, bei dem der Anteil der Partikel mit Durchmessern kleiner oder gleich diesem Wert 50 % in Bezug auf die Gesamtzahl der Partikel beträgt.

2. Das keramische Filtrationselement gemäß Anspruch 1, wobei die ersten Partikel ausgewählt sind aus der Gruppe bestehend aus SiC, $Si_3N_4$, AlN und Mischungen davon und wobei das Verhältnis Y im Bereich von 5 bis 3.000, bevorzugt 5 bis 1.000, weiter vorzugsweise 50 bis 400, noch weiter vorzugsweise 150 bis 250, liegt.

3. Das keramische Filtrationselement gemäß Anspruch 1, wobei das Verhältnis Y unter 4.000, vorzugsweise unter 2.000, weiter bevorzugt unter 1.500, weiter bevorzugt unter 800, weiter bevorzugt unter 600, mehr bevorzugt unter 300, liegt; oder wobei das Verhältnis Y über 10, noch bevorzugter über 100, liegt.

4. Das keramische Filtrationselement gemäß einem der Ansprüche 1 bis 3, wobei der erste Partikel AlN ist und der zweite Partikel $Al_2O_3$ ist, oder wobei der erste Partikel AlN ist und der zweite Partikel $ZrO_2$ ist, oder wobei der erste Partikel AlN ist und der zweite Partikel $TiO_2$ ist.

5. Das keramische Filtrationselement gemäß einem der Ansprüche 1 bis 3, wobei der erste Partikel $Si_3N_4$ ist und der zweite Partikel $Al_2O_3$ ist, oder wobei der erste Partikel $Si_3N_4$ ist und der zweite Partikel $ZrO_2$ ist, oder wobei der erste Partikel $Si_3N_4$ ist und der zweite Partikel $TiO_2$ ist.

6. Das keramische Filtrationselement gemäß einem der Ansprüche 1 bis 3, wobei der erste Partikel SiC ist und der zweite Partikel $ZrO_2$ ist, oder wobei der erste Partikel SiC ist und der zweite Partikel $TiO_2$ ist, oder wobei der erste Partikel SiC ist und der zweite Partikel $Al_2O_3$ ist, bevorzugt wobei der erste Partikel SiC ist und der zweite Partikel $ZrO_2$ ist.

7. Das keramische Filtrationselement gemäß einem der vorhergehenden Ansprüche, wobei die zweiten Partikel einen

numerischen $D_{90}$ Durchmesser im Bereich von 3 nm bis 400 nm, weiter bevorzugt von 3 nm bis 300 nm, mehr bevorzugt von 5 nm bis 200 nm, am meisten bevorzugt von 5 nm bis 100 nm, aufweisen, wobei der numerische $D_{90}$ Durchmesser der zweiten Partikel durch dynamische Lichtstreuung bestimmt wird, und wobei der numerische $D_{90}$ Durchmesser als der Durchmesser der Partikel definiert ist, bei dem der Anteil der Partikel mit Durchmessern kleiner oder gleich diesem Wert 90 % in Bezug auf die Gesamtzahl der Partikel beträgt.

8. Das keramische Filtrationselement gemäß einem der vorhergehenden Ansprüche, wobei die ersten Partikel einen numerischen $D_{50}$ Durchmesser von 10 nm bis 15 $\mu$m, bevorzugt von 10 nm bis 10 $\mu$m, weiter bevorzugt von 10 nm bis 5 $\mu$m, weiter bevorzugt von 10 nm bis 3 $\mu$m, mehr bevorzugt von 50 nm bis 1.750 nm, am meisten bevorzugt von 100 nm bis 1.000 nm, aufweisen, wobei der numerische $D_{50}$ Durchmesser der ersten Partikel durch dynamische Lichtstreuung bestimmt wird.

9. Das keramische Filtrationselement gemäß Anspruch 8, wobei die ersten Partikel einen numerischen $D_{90}$ Durchmesser im Bereich von 20 nm bis 6 $\mu$m, bevorzugt von 100 nm bis 5 $\mu$m, noch bevorzugter von 250 nm bis 3 $\mu$m, mehr bevorzugt von 400 nm bis 2,5 $\mu$m, am meisten bevorzugt von 450 nm bis 2 $\mu$m, aufweisen, wobei der numerische $D_{90}$ Durchmesser der ersten Partikel durch dynamische Lichtstreuung bestimmt wird, und wobei der numerische $D_{90}$ Durchmesser als der Durchmesser der Partikel definiert ist, bei dem der Anteil der Partikel mit Durchmessern kleiner oder gleich diesem Wert 90 % in Bezug auf die Gesamtzahl der Partikel beträgt.

10. Verfahren zur Herstellung eines keramischen Filtrationselements nach einem der vorhergehenden Ansprüche, wobei das Verfahren zur Herstellung die Schritte

   a) Bereitstellen einer Trägerstruktur mit einer Trägeroberfläche und einer Beschichtungssuspension, die die ersten und zweiten Partikel enthält;
   b) Inkontaktbringen der Trägeroberfläche mit der Beschichtungssuspension für eine Zeitdauer, bevorzug von 10 bis 120 Sekunden, mehr bevorzugt für 60 Sekunden oder für 30 Sekunden;
   c) Entfernen überschüssiger Beschichtungssuspension ohne Entfernen eines Restfilms der Beschichtungssuspension;
   d) Trocknen des Restfilms, bevorzugt für 2 bis 6 h bei einer Temperatur im Bereich von 60 °C bis 90 °C; und
   e) Sintern der Trägerstruktur mit dem Restfilm;
   f) optional Wiederholen der Schritte b) bis e), bevorzugt bis zu 7 Mal, mehr bevorzugt bis zu 5 Mal.

11. Das Verfahren gemäß Anspruch 10 zur Herstellung eines keramischen Filtrationselements gemäß einem der Ansprüche 1 bis 9, wobei die ersten Partikel ausgewählt sind aus der Gruppe bestehend aus SiC, $Si_3N_4$, AIN und Mischungen davon, wobei der Schritt des Sinterns bei einer Temperatur im Bereich von 300 °C bis 900 °C, bevorzugt im Bereich von 400 °C bis 900 °C, mehr bevorzugt im Bereich von 400 °C bis 700 °C, durchgeführt wird.

12. Das Verfahren gemäß einem der Ansprüche 10 oder 11, wobei der Schritt des Sinterns in einer sauerstoffhaltigen Atmosphäre, bevorzugt in Luftatmosphäre, durchgeführt wird.

13. Das Verfahren gemäß einem der Ansprüche 10 bis 12, wobei die Beschichtungssuspension mindestens 1 Gew.-% des ersten Partikels bezogen auf das Gesamtgewicht der Mischung, bevorzugt wobei die Beschichtungssuspension 1 Gew.-% bis 70 Gew.-% des ersten Partikels, mehr bevorzugt 1 Gew.-% bis 30 Gew.-% des ersten Partikels, am meisten bevorzugt 5 Gew.-% bis 15 Gew.-% des ersten Partikels, umfasst.

14. Das Verfahren gemäß einem der Ansprüche 10 bis 13, wobei die Beschichtungssuspension mindestens 0,1 Gew.-% des zweiten Partikels bezogen auf das Gesamtgewicht der Mischung, bevorzugt 0,1 Gew.-% bis 25 Gew.-% des zweiten Partikels, mehr bevorzugt 0,1 Gew.-% bis 10 Gew.-% des zweiten Partikels, umfasst, am meisten bevorzugt wobei die Beschichtungssuspension 1 Gew.-% bis 8 Gew.-% des zweiten Partikels umfasst.

**Revendications**

1. Un élément de filtration en céramique préparé par un procédé de fabrication d'un élément de filtration en céramique, le procédé de fabrication comprenant les étapes suivantes :

   a) fournir une structure de support ayant une surface de support, et une suspension de revêtement comprenant les premier et deuxième produits particulaires ;

b) mettre la surface de support en contact avec la suspension de revêtement pendant une durée ;

c) éliminer l'excès de suspension de revêtement sans éliminer un film résiduel de suspension de revêtement ;

d) sécher le film résiduel ; et

e) fritter la structure de support avec le film résiduel ; et dans lequel l'élément de filtration en céramique comprend une structure de support et une couche de filtration, la couche de filtration comprenant au moins des premières particules et des deuxièmes particules, les deuxièmes particules étant sélectionnées dans le groupe constitué de particules de céramique d'oxyde, et les première et deuxième particules différant au moins par leur diamètre numérique $D_{50}$, **caractérisé en ce que** le rapport (Y) du diamètre numérique $D_{50}$ des premières particules et du diamètre numérique $D_{50}$ des deuxièmes particules est compris dans une gamme allant de 2 à 5000, les premières particules étant sélectionnées dans le groupe constitué de SiC, $Si_3N_4$, AIN et de mélanges de ceux-ci ; et

les deuxièmes particules ayant un diamètre numérique $D_{50}$ compris entre 1 nm et 50 nm ; et

les deuxièmes particules étant sélectionnées dans le groupe constitué de $Al_2O_3$, $SiO_2$, $TiO_2$, $ZrO_2$ et de mélanges de ceux-ci ; et

les diamètres numériques $D_{50}$ des premières et deuxièmes particules sont déterminés par diffusion dynamique de la lumière,

le deuxième produit particulaire étant présent en une quantité allant de 10 % en poids à 30 % en poids par rapport au poids total des premier et deuxième produits particulaires, et

le diamètre numérique $D_{50}$ étant défini comme étant le diamètre des particules, la proportion de particules ayant des diamètres inférieurs ou égaux à cette valeur étant de 50 % par rapport au nombre total de particules.

2.  L'élément de filtration en céramique selon la revendication 1, dans lequel les premières particules sont choisies dans le groupe constitué de SiC, $Si_3N_4$, AIN et les mélanges de ceux-ci, et dans lequel le rapport Y est compris entre 5 et 3000, de préférence entre 5 et 1000, de préférence encore entre 50 et 400, de façon encore préférée entre 150 et 250.

3.  L'élément de filtration en céramique selon la revendication 1, dans lequel le rapport Y est inférieur à 4000, de préférence inférieur à 2000, de préférence encore inférieur à 1500, de façon encore préférée inférieur à 800, de façon encore préférée inférieur à 600, de façon encore préférée inférieur à 300 ; ou

dans lequel le rapport Y est supérieur à 10, de façon encore préférée supérieur à 100.

4.  L'élément de filtration en céramique selon l'une quelconque des revendications 1 à 3, dans lequel le premier produit particulaire est de l'AIN et le deuxième produit particulaire est de l'$Al_2O_3$, ou dans lequel le premier produit particulaire est de l'AIN et le deuxième produit particulaire est du $ZrO_2$, ou dans laquelle le premier produit particulaire est de l'AIN, et le deuxième produit particulaire est du $TiO_2$.

5.  L'élément de filtration en céramique selon l'une quelconque des revendications 1 à 3, dans lequel le premier produit particulaire est du $Si_3N_4$ et le deuxième produit particulaire est de l'$Al_2O_3$, ou dans lequel le premier produit particulaire est du $Si_3N_4$ et le deuxième produit particulaire est du $ZrO_2$, ou dans lequel le premier produit particulaire est du $Si_3N_4$ et le deuxième produit particulaire est du $TiO_2$.

6.  L'élément de filtration en céramique selon l'une quelconque des revendications 1 à 3, dans lequel le premier produit particulaire est du SiC et le deuxième produit particulaire est du $ZrO_2$, ou dans lequel le premier produit particulaire est du SiC et le deuxième produit particulaire est du $TiO_2$, ou dans lequel le premier produit particulaire est du SiC, et le deuxième produit particulaire est de l'$Al_2O_3$, de préférence le premier produit particulaire étant du SiC et le deuxième produit particulaire étant du $ZrO_2$.

7.  L'élément de filtration en céramique selon l'une quelconque des revendications précédentes, dans lequel les deuxièmes particules ont un diamètre numérique $D_{50}$ compris entre 3 nm et 400 nm, de préférence encore entre 3 nm et 300 nm, de façon encore préférée entre 5 nm et 200 nm, de façon la plus préférée entre 5 nm et 100 nm, le diamètre numérique $D_{50}$ des deuxièmes particules étant déterminé par diffusion dynamique de la lumière, et le diamètre numérique $D_{50}$ étant défini comme le diamètre des particules, la proportion des particules dont les diamètres sont inférieurs ou égaux à cette valeur étant de 90 % par rapport au nombre total de particules.

8.  L'élément de filtration en céramique selon l'une quelconque des revendications précédentes, dans lequel les premières particules ont un diamètre numérique $D_{50}$ allant de 10 nm à 15 $\mu$m, de préférence de 10 nm à 10 $\mu$m, de préférence encore de 10 nm à 5 $\mu$m, de préférence encore de 10 nm à 3 $\mu$m, de façon encore préférée de 50 nm à 1750 nm, de façon la plus préférée de 100 nm à 1000 nm, le diamètre numérique $D_{50}$ des premières particules

étant déterminé par diffusion dynamique de la lumière.

9. L'élément de filtration en céramique selon la revendication 8, dans lequel les premières particules ont un diamètre numérique $D_{50}$ compris entre 20 nm et 6 $\mu$m, de préférence entre 100 nm et 5 $\mu$m, de façon encore préférée entre 250 nm et 3 $\mu$m, de façon encore préférée entre 400 nm et 2,5 $\mu$m, de façon la plus préférée entre 450 nm et 2 $\mu$m, le diamètre numérique $D_{50}$ des premières particules étant déterminé par diffusion dynamique de la lumière, et le diamètre numérique $D_{50}$ étant défini comme étant le diamètre des particules, la proportion de particules ayant des diamètres inférieurs ou égaux à cette valeur étant de 90 % par rapport au nombre total de particules.

10. Un procédé de fabrication d'un élément de filtration en céramique selon l'une quelconque des revendications précédentes, dans lequel le procédé de fabrication comprend les étapes suivantes :

a) fournir une structure de support ayant une surface de support, et une suspension de revêtement comprenant les premier et deuxième produits particulaires ;
b) mettre la surface de support en contact avec la suspension de revêtement pendant une durée, de préférence de 10 à 120 secondes, de façon encore préférée pendant 60 secondes ou pendant 30 secondes ;
c) éliminer l'excès de suspension de revêtement sans éliminer un film résiduel de suspension de revêtement ;
d) sécher le film résiduel, de préférence pendant 2 à 6 h et à une température comprise entre 60°C et 90°C ; et
e) fritter la structure de support avec le film résiduel,
f) optionnellement, répéter les étapes b) à e), de préférence jusqu'à 7 fois, de façon encore préférée jusqu'à 5 fois.

11. Le procédé selon la revendication 10 pour la fabrication d'un élément de filtration en céramique selon l'une quelconque des revendications 1 à 9, dans lequel les premières particules sont choisies dans le groupe constitué par SiC, $Si_3N_4$, AlN, et les mélanges de ceux-ci, l'étape de frittage étant mise en oeuvre à une température comprise entre 300°C et 900°C, de préférence entre 400°C et 900°C, de manière encore préférée entre 400°C et 700°C.

12. Le procédé selon l'une quelconque des revendications 10 ou 11, dans lequel l'étape de frittage est mise en oeuvre sous atmosphère comprenant de l'oxygène, de préférence sous atmosphère d'air.

13. Le procédé selon l'une quelconque des revendications 10 à 12, dans lequel la suspension de revêtement comprend au moins 1% en poids du premier produit particulaire, par rapport au poids total du mélange, la suspension de revêtement comprenant de préférence de 1% en poids à 70% en poids du premier produit particulaire, de façon encore préférée de 1% en poids à 30% en poids du premier produit particulaire, de façon la plus préférée, la suspension de revêtement comprenant de 5% en poids à 15 % en poids du premier produit particulaire.

14. Le procédé selon l'une quelconque des revendications 10 à 13, dans lequel la suspension de revêtement comprend au moins 0,1% en poids du deuxième produit particulaire par rapport au poids total du mélange, de préférence de 0,1% en poids à 25% en poids du deuxième produit particulaire, de façon encore préférée de 0,1% en poids à 10% en poids du deuxième produit particulaire, la suspension de revêtement comprenant, de façon la plus préférée, de 1% en poids à 8% en poids du deuxième produit particulaire.

**Fig. 1**

**Fig. 2**

Fig. 3

**REFERENCES CITED IN THE DESCRIPTION**

**Patent documents cited in the description**

- CN 104587846 B
- CN 102718494 B
- US 20040038105 A1
- US 5120576 A